Europäisches Patentamt

**European Patent Office**

Office européen des brevets

(11) Veröffentlichungsnummer: **0 048 853**
**B1**

(12) **EUROPÄISCHE PATENTSCHRIFT**

(45) Veröffentlichungstag der Patentschrift:
**27.12.85**

(21) Anmeldenummer: **81107142.2**

(22) Anmeldetag: **10.09.81**

(51) Int. Cl.⁴: **H 04 Q 11/04**

(54) Fernsprechvermittlungsnetz zur digitalen Sprachübertragung.

(30) Priorität: **29.09.80 DE 3036649**

(43) Veröffentlichungstag der Anmeldung:
**07.04.82 Patentblatt 82/14**

(45) Bekanntmachung des Hinweises auf die Patenterteilung:
**27.12.85 Patentblatt 85/52**

(84) Benannte Vertragsstaaten:
**BE FR GB IT NL SE**

(56) Entgegenhaltungen:
**DE - A - 2 441 099**
**DE - A - 2 522 759**
**FR - A - 2 362 546**
**US - A - 3 749 845**

**IEEE TRANSACTIONS ON COMMUNICATIONS, Band COM-28, Nr. 9, September 1980 New York, US MOWAFI et al.: "Integrated Voice/Data Packet Switching Techniques for Future Military Networks" Seiten 1655-1662**
**COLLOQUE INTERNATIONAL DE COMMUTATION, Paris 7-11 Mai 1979 Paris, FR IKEDA et al.: "Système de commutation de circuits virtuels: un nouveau concept pour les réseaux numériques à services intégrés" Seiten 757-764**

(73) Patentinhaber: **Siemens Aktiengesellschaft, Berlin und München Wittelsbacherplatz 2, D-8000 München 2 (DE)**

(72) Erfinder: **Gefrörer, Stanislaus, Dipl.-Math., Flurweg 34, D-8021 Taufkirchen (DE)**
Erfinder: **Vollmeyer, Werner, Dr. Dipl.-Ing., Wertheimer Strasse 112, D-8000 München 60 (DE)**

## Beschreibung

Die vorliegende Erfindung betrifft ein Fernsprechvermittlungsnetz zur digitalen Sprachübertragung, bei dem eine von einem Ursprungsteilnehmer in eine Ursprungsvermittlungsstelle eingegebene Wählinformation dazu verwendet wird, eine von der Ursprungsvermittlungsstelle ausgehende, im Bedarfsfalle über eine oder mehrere Durchgangsvermittlungsstellen verlaufende und bis zu einer Zielvermittlungsstelle, an die ein betreffender Zielteilnehmer angeschlossen ist, reichende virtuelle Verbindung aufzubauen.

Die Übertragung von digitalisierten Sprachsignalen in Fernsprechnetzen gewinnt sowohl wegen der damit verbundenen Vorteile für die Vermittlungstechnik als auch wegen der Vorteile für die Übertragungstechnik an sich zunehmend an Bedeutung.

In bisher bekannten Fernsprechnetzen für digitale Sprachübertragung werden in aller Regel — wie auch in Analognetzen — Verbindungen zwischen jeweils zwei Teilnehmern für die gesamte Gesprächsdauer zusammengeschaltet. Mit zunehmender Verdichtung solcher Netze bzw. mit zunehmender Teilnehmerzahlen wachsen die Schwierigkeiten bezüglich der Anzahl der verfügbaren Kanäle.

Es ist bekannt, daß eine Sprechverbindung für ein einzelnes Gespräch in aller Regel über die Zeit nur zu einem geringen Teil ausgenutzt wird, da zum einen die Gesprächspartner jeweils abwechselnd sprechen und zum anderen auch der Redefluß des einzelnen Gesprächspartners nicht kontinuierlich verläuft. Es entstehen jeweils auch in einem Kurzmonolog Sprechpausen, während derer die betreffende Sprechverbindung tatsächlich nicht benötigt würde. Dieser Umstand wird bekanntlich durch Verfahren zur Einsparung von Kanalkapazität, insbesondere in kostenintensiven Verbindungsabschnitten, beispielsweise Transatlantikkabeln, Satellitenstrecken u. ä., vorteilhaft ausgenutzt. Ein diesbezüglich bekanntes Verfahren stellt das TASI (time assigned speech interpolation)-Verfahren dar.

Bei der Sprachinterpolation, die bei diesem bekannten TASI-Verfahren vorgenommen wird, wird jeweils ein Kanal für eine betreffende Sprechverbindung durchgeschaltet, wenn in der jeweils betreffenden Richtung tatsächlich gesprochen wird. In allen anderen Zeitabschnitten steht die Kanalkapazität weiteren individuellen Sprechverbindungen zur Verfügung. Es ist ohne weiteres erkennbar, daß mittels eines solchen Verfahrens der Umstand, nachdem eine herkömmliche Sprechverbindung nach den erläuterten Gegebenheiten während eines Gespräches nur zeitabschnittsweise benötigt wird, vorteilhaft für eine bessere Ausnutzung der Kanäle verwendet werden kann. Mit der Sprachinterpolation kann die vorhandene Übertragungskapazität eines Leitungsbündels sehr viel besser ausgenutzt werden. Es ist z. B. möglich, ein Bündel von 35 oder mehr Leitungen mit etwa doppelt so vielen Gesprächen, als herkömmlicherweise möglich ist, zu belasten.

Bei Verbindungen mit jeweils zeitabschnittsweise für eine kurze Sprechphase durchgeschalteten Wegen wird von sog. virtuellen Verbindungen gesprochen. Eine Sprachinterpolation erfordert auch nach üblichen Verfahren eine kurzzeitige Zwischenspeicherung von jeweils gebildeten, sog. Sprechphasen oder Phrasen repräsentierende, digitalen Signalen. Es ist daher darauf zu achten, daß die Laufzeitobergrenze von Teilnehmer zu Teilnehmer, die mit 400 ms festgelegt ist, nicht überschritten wird. Zieht man in Betracht, daß ein Satellitenabschnitt bereits 300 ms Laufzeit beansprucht, so verbleiben für die restlichen abschnitte nur noch ca. 100 ms Zeit. Dieser Umstand ist insbesondere für weltweite Sprechverbindungen von besonderer Bedeutung.

Die bekannten Verfahren der Sprachinterpolation werden grundsätzlich abschnittweise, beispielsweise zwischen zwei Vermittlungsstellen, eingesetzt. Jede der beiden Vermittlungsstellen hat dabei ein Bündel von gehenden Kanälen zur Verfügung, aus dem sie die Kanäle den Nachrichtensendern nach Bedarf zuteilt. In einem vollständigen Fernsprechnetz liegt dagegen in aller Regel ein sternförmiges oder sogar ein vermaschtes Netz vor, und eine Verbindung besteht in der Regel aus mehreren Abschnitten. Wegen der erforderlichen Zwischenspeicherzeit je Abschnitt ergäbe sich aber bei mehreren Abschnitten (bis zu 12) eine viel zu große Laufzeit. Dies würde somit zu keiner realistischen Lsöung führen können.

Aus der Druckschrift IEEE TRANSACTIONS ON COMMUNICATIONS, Band COM-28, Nr. 9, September 1980, S. 1655 bis 1662, ist ein Fernsprechvermittlungsnetz zur digitalen Sprachübertragung bekannt. bei dem eine von einem Ursprungsteilnehmer in eine Ursprungsvermittlungsstelle (Source) eingegebene Wählinformation (Trailblazer packet) dazu verwendet wird, eine von der Ursprungsvermittlungsstelle ausgehende bis zu einer Zielvermittlungsstelle (Destination node), an die ein betreffender Zielteilnehmer angeschlossen ist, reichende virtuelle Verbindung für Informationspakete aufzubauen.

Aus der US-A-3 749 845 ist ein Datenübertragungssystem bekannt, das die während der Übertragungspausen ungenutzten Verbindungen ausnutzt, indem zunächst von einer Ursprungsvermittlungsstelle ausgehende, im Bedarfsfalle über eine oder mehrere Durchgangsvermittlungsstellen verlaufende virtuelle Verbindungen zwischen einem Digitalgerät und einem anderen Ziel-Digitalgerät aufgebaut werden und die Digitalinformation dann über reale Verbindungen übertragen wird. Dabei ist die Digitalinformation in Informationsblöcke (packets) mit einer vorangestellten Zielkennungsfolge, die Angaben über jeweils zu durchlaufende virtuelle Teilverbindungen enthält, und mit einer an das Ende des Informationsblockes dessen Ende signalisierenden Endekennung versehen.

Durch die Druckschrift COLLOQUE INTERNATIONAL DE COMMUTATION, Paris, 7. bis 11. Mai 1979, S. 757 bis 764, ist es bei einem Fernsprechvermittlungsnetz zur digitalen Sprachübertragung mit virtuellem Verbindungsaufbau bekannt, einen Sprachendetektor zur Erkennung der Sprechpausen vorzusehen und eine Phrasen-Rasterung zu 8 ms entsprechend 64 Oktetts vorzusehen.

Der vorliegenden Erfindung liegt die Aufgabe zugrunde, ein Fernsprechvermittlungsnetz zu schaffen, in dem die Sprache digital übertragen wird und bei dem es mit verhältnismäßig einfachen Mitteln bzw. Maßnahmen erreicht werden kann, die Vorteile der Sprachinterpolation auch dort zu nutzen, wo Verbindungen zum Austausch von Informationen weitgespannt und in beliebigen Richtungen, verlaufend über verschiedene Vermittlungsstellen hinweg, zwischen Teilnehmern aufgebaut werden müssen.

Die der Erfindung zugrundeliegende Aufgabe wird bei einem Fernsprechvermittlungsnetz zur digitalen Sprachübertragung der eingangs genannten Art bzw. nach dem Oberbegriff der Patentansprüche 1 oder 3 durch die in dem jeweiligen kennzeichnenden Teil der Patentansprüche 1 bzw. 3 angegebenen Merkmale gelöst.

Die Anwendung des erfindungsgemäßen Prinzips bei einem Fernsprech-Mobilfunksystem oder bei einem universellen Digitalnetz oder bei einem universellen Mobilfunk-Digitalnetz ist Gegenstand der prioritätsgleichen Europäischen Patentanmeldungen 0 048 854 bzw. 0 048 860 bzw. 0 048 861.

Die Erfindung bietet den Vorteil, daß das an sich bekannte Verfahren der Sprachinterpolation in beliebig gestalteten, für die Übertragung von digitalen Sprachsignalen vorgesehenen Fernsprechnetzen zur Einsparung von Kanalkapazität verwendet werden kann, ohne daß es zu unzulässig großen Laufzeiten zwischen den Teilnehmern kommt.

Vorteilhafte Weiterbildungen der Erfindung sind durch die in den Unteransprüchen angegebenen Merkmale gekennzeichnet.

Im folgenden wird die Erfindung anhand mehrerer, Ausführungsbeispiele für die Erfindung betreffender Figuren im einzelnen erläutert.

Fig. 1 zeigt schematisch den Aufbau eines Fernsprechvermittlungsnetzes gemäß der vorliegenden Erfindung.

Fig. 2 zeigt schematisch den Aufbau einer ersten Aufbaudatenfolge D'.

Fig. 3 zeigt schematisch den Aufbau einer zweiten Aufbaudatenfolge D''.

Fig. 4 zeigt schematisch den Aufbau einer Sprachinformation S mit einzelnen Phrasen P mit jeweils einer vorangestellten Zielkennungsfolge Z und einer anschließenden Endekennung E.

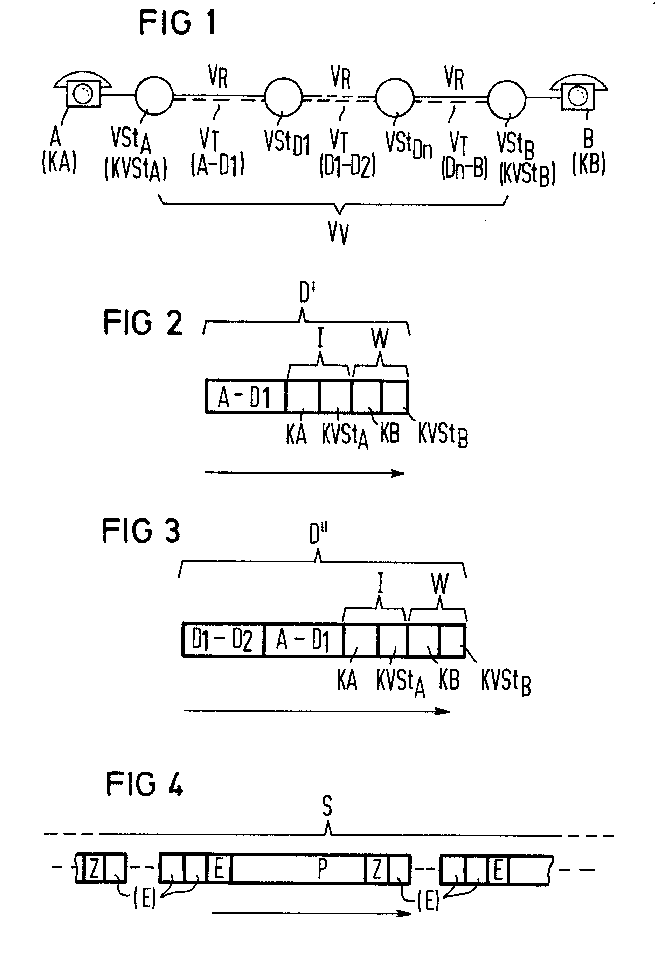

Wie bereits erläutert, zeigt Fig. 1 schematisch den Aufbau eines Fernsprechvermittlungsnetzes gemäß der vorliegenden Erfindung. Ein rufender Teilnehmer, nämlich der Ursprungsteilnehmer A, teilt seiner Vermittlungsstelle, nämlich der Ursprungsvermittlungsstelle $VSt_A$, mittels eines Rufaufbaupaketes, das beispielsweise durch das an sich bekannte High-Data-Link-Control-Verfahren HDLC gesichert ist und im folgenden als Verbindungsbeginn-Frame oder Beginn-Frame (»Frame« hier in dem Sinn eines Nutzinformation tragenden HDLC-Blocks) bezeichnet wird, in einem Kanal mit einer Datenübertragungsgeschwindigkeit von 64 kbit/s die Nummer des gwünschten Teilnehmers in Form einer Wählinformation W, die eine Zielvermittlungsstellen-Kennung $KVSt_B$ und eine Zielteilnehmer-Kennung KB enthält, mit. Zugleich oder vorher könnte -falls erforderlich- in einem gesonderten Teilnehmer-Signalkreis ein entsprechender Informationsaustausch stattfinden, um sicherzustellen, daß der Teilnehmerwunsch in dem 64-kbit/s-Kreis von der Vermittlung empfangen und quittiert wird.

Die Vermittlung schaltet nicht — wie bei Durchschaltvermittlungen üblich — für die Verbindung eine Leitung, sondern sucht ein Leitungsbündel in die gewünschte Richtung aus, das genügend freie Kapazität aufweist, und meldet die virtuelle Verbindung mit einem speziell gekennzeichneten und gesicherten Verbindungsbeginn-Frame der nächsten Vermittlungsstelle, beispielsweise der ersten Durchgangsvermittlungsstelle $VSt_{D1}$. (Für die Kennzeichnung kann beispielsweise auch eine eigene Leitung verwendet werden.) Dieser Beginn-Frame enthält die Kennungen für den gerufenen und für den rufenden Teilnehmer, nämlich eine Identifikationsinformation I mit der Ursprungsvermittlungsstellen-Kennung $KVSt_A$ und der Ursprungsteilnehmer-Kennung KA. Außerdem enthält er ein Oktett zur lokalen, d. h. nur in dieser Vermittlungsstelle verständlichen Kennzeichnung des abgehenden Bündels. Bei dieser Kennzeichnung werden die beiden Kombinationen 00000000 und 11111111 nicht verwendet.

Die lokale Kennzeichnung eines Bündels, nämlich die Leitungsbündelkennung $A\text{-}D_1$, entspricht der lokalen Adressierung einer Richtung und dient nach Einrichtung der virtuellen Verbindung der Wegelenkung.

Die nächste Vermittlungsstelle, nämlich $VSt_{D1}$, »merkt« sich das Bündel, aus dem der Beginn-Frame kam, liest die Nummer der Zielvermittlungsstelle $VSt_B$ des Zielteilnehmers B, sucht das entsprechende Bündel, fügt dem Beginn-Frame wiederum zur lokalen Kennzeichnung des ankommenden und des abgehenden Bündels je ein Oktett an und sendet den Beginn-Frame auf eine Leitung des ausgesuchten abgehenden Bündels.

Die nachfolgenden Durchgangsvermittlungsstellen $VSt_{Dn}$ verfahren ebenso.

Die Zielvermittlungsstelle $VSt_B$ des gerufenen Teilnehmers, nämlich des Zielteilnehmers B, empfängt schließlich den Beginn-Frame, der die Oktetts enthält, mit denen die durchlaufenen Vermittlungsstellen die zu benutzenden Bündel nacheinander bezeichnet haben, sowie die Nummern des rufenden und des gerufenen Teilnehmers einschließlich der Nummern der zugehörigen Endvermittlungsstellen. Die Vermittlungsstelle des gerufenen Teilnehmers sendet den Beginn-Frame zur Vermittlungsstelle des rufenden Teilnehmers als Quittung gekennzeichnet zurück.

Beginn-Frame und Quittungs-Frame haben dann alle Durchgangsvermittlungsstellen durchlaufen. Mit Hilfe der Teilnehmernummern können dort diese beiden Frames identifiziert werden. Die Information des Quittungs-Frame kann abgespeichert werden. Die Durchgangsvermittlungsstellen können somit die virtuellen Verbindungen überwachen.

Ferner ist nun die virtuelle Verbindung auch den beiden Endvermittlungsstellen bekannt. Der gerufene Teilnehmer wird gerufen, der rufende Teilnehmer bekommt die Rufquittung. Nachdem sich der gerufene Teilnehmer gemeldet hat, wird auf der Teilnehmerleitung das Gespräch digital übertragen.

Während bei dem bis hier beschriebenen Verfahren jedes Bündel durch zwei verschiedene Oktetts von den beiden angrenzenden Vermittlungsstellen jeweils lokal und unabhängig bezeichnet wird und diese beiden Oktetts im Beginn- und Quittungs-Frame auch übertragen werden müssen, kann alternativ auch mit nur einem Oktett je Bündel gearbeitet werden, das in einer Vermittlungsstelle dieses Bündel als abgehendes und in der nächsten Vermittlungsstelle als ankommendes kennzeichnet. Durch 8 bit können 256 Bündel in der Umgebung der Vermittlungsstelle bezeichnet werden. Werden die Kombinationen 11111111 und 00000000 ausgelassen, so verbleiben immer noch 254 Bündelkennzeichen. Andererseits gibt es in einem Land sicher erheblich mehr als 254 Bündel. Die Leitungsbündel-Kennungen werden daher mehrfach verwendet werde müssen. Durch eine Strategie — beispielsweise ähnlich der, die beim Mobilfunk in Kleinzonennetzen für die Frequenzen der Kanäle angewandt wird — ist sicherzustellen, daß Mehrdeutigkeiten vermieden werden.

Prinzipiell wäre es denkbar, in beiden Richtungen verschiedene Wege oder Bündel zu nutzen. Das hat aber den Nachteil, daß mindestens beim Aufbau der virtuellen Verbindung doppelt quittiert werden muß und daß die Überwachung einer Verbindung größere Zeitkonstanten erfordert, weil ggf. verhältnismäßig lange Sprache in nur einer Richtung übertragen werden kann.

Hat ein Bündel N Sprechkreise, so darf eine Vermittlungsstelle höchstens 2 N virtuelle Verbindungen annehmen. Hierbei ist vorausgesetzt, daß das Bündel mindestens 35 Sprechkreise aufweist. Hat es weniger als 35 Sprechkreise, so ist ein Ausnutzungsfaktor kleiner als 2 zu wählen.

Die Leitungen eines Bündels müssen einheitliche Eigenschaften, insbesondere möglichst gleiche Laufzeiten aufweisen. Beispielsweise dürfen Pupin- und TF-Leitungen oder Satelliten- und Seekabelleitungen nicht gemischt werden, weil sonst während eines Gesprächs abrupt Laufzeitänderungen auftreten können.

Mit der Annahme des Rufes durch den gerufenen Teilnehmer (»Abheben«) beginnt der Gesprächszustand, was dem rufenden Teilnehmer gemeldet wird.

Der Sprach-Dialog wird von den beiden Teilnehmervermittlungsstellen in Phrasen P unterteilt. (Eine Phrase ist ein zusammenhängender Sprachabschnitt.) Ein an sich bekannter Sprachdetektor analysiert eine vom Teilnehmer kommende digitalisierte Sprachinformation S und erkennt den Beginn einer Phrase P. Das codierte Sprachsignal wird für $\leq 15$ ms zwischengespeichert und in dieser Zeit eine Zielkennungsfolge Z ausgesendet. Die Zielkennungsfolge Z besteht aus den Kennzeichen der abgehenden Bündel in den Vermittlungen, die die Phrase P durchlaufen soll (unterstellt man nächstens 13 Vermittlungen hintereinander, so ergeben sich $13 \times 8$ bit $= 104$ bit), sowie aus der Nummer des zu erreichenden (d. h. gerufenen bzw. rufenden) Teilnehmers bei den Endvermittlungsstellen.

Für die Nummer des Teilnehmers werden zwei Oktetts angesetzt, die Oktetts 00000000 und 11111111 jedoch nicht verwendet. Somit ergeben sich $254 \times 254 = 64\,516$ verschiedene Teilnehmernummern an der Zielvermittlungsstelle.

Fügt man am Beginn der Zielkennungsfolge Z noch ein Zielbeginnzeichen hinzu, ergeben sich für das Zielkriterium maximal $16 \times 8$ bit $= 128$ bit.

Vorteilhafterweise kann die Zielkennungsfolge gegen Fehler gesichert werden. Dafür wären dann noch 16 bit zusätzlich anzusetzen. Es kann jedoch in aller Regel davon ausgegangen werden, daß einerseits die Übertragungsfehlerhäufigkeit in einem digitalen Netz hinreichend klein ist und daß andererseits auch heute in einem analogen Netz gelegentlich Doppelverbindungen in Kauf genommen werden. Infolgedessen kann auf eine Beschreibung der Sicherung verzichtet werden.

Das Zielbeginnzeichen ist derart aufgebaut, daß es sich von dem Oktett 11111111 in mindestens 2 bit unterscheidet. Es gibt die Anzahl der noch vorhandenen Oktetts in der Zielkennungsfolge Z an und enthält ferner eine Dienstkennung.

Bei einer Übertragungsgeschwindigkeit von 64 kbit/s ergibt sich eine Aussendezeit für die Zielkennungsfolge Z von $\leq 2$ ms. Die o. a. Zwischenspeicherzeit von $\leq 15$ ms entsteht, weil zusätzlich zur Aussendezeit noch eine Karenzzeit erforderlich ist, in der sicher erkannt werden muß, daß es sich tatsächlich um ein Sprachsignal und nicht um einen einzelnen Knack handelt. Die Karenzzeit wird aber nur bei der ersten Vermittlungsstelle benötigt. Bei den weiteren Vermittlungsstellen braucht nur für etwa 0,5 ms zwischengespeichert zu werden.

Wurde die Übertragung einer Phrase P auf einer Leitung aufgeschlossen, wird oktettweise ein Kriterium übertragen, das die Ruhelage der Leitung anzeigt, z. B. die Kombination 11111111. Das erste Oktett, das die erste Vermittlungsstelle als Beginn-Kennzeichen für eine Phrase P auf die (aus dem richtigen Bündel ausgewählte) Leitung zur zweiten Vermittlungsstelle sendet, ist das Zielbeginnzeichen und dann das Oktett, das das Bündel zur dritten Vermittlungsstelle kennzeichnet. Dann folgt das Oktett, das das Bündel zur vierten Vermittlungsstelle kennzeichnet usw., bis alle Bündel bis zur letzten Vermittlungsstelle gekennzeichnet sind. Auf die letzte Leitungsbündel-Kennung, beispielsweise $D_1 - B$, folgt die aus zwei Oktetts bestehende Nummer des Teilnehmers an der betreffenden Endvermittlungsstelle. Darauf folgt das codierte Sprachsignal.

Anstelle der Kombination 11111111 können auch einige andere Kombination verwendet werden. Dabei ist sicherzustellen, daß die gewählte Kombination in einer mit HDLC betriebenen Datenverbindung nicht vorkommt.

Die zweite Vermittlungsstelle liest nach dem Zielbeginnzeichen nur das erste Oktett, vernichtet es, setzt die im Zielbeginnzeichen vorhandene Angabe über die Anzahl der Oktetts in der Zielkennungsfolge Z um eins herab und sendet das Zielbeginnzeichen und das Nachfolgende auf eine Leitung des durch das erste Oktett bezeichneten Bündels. Die nachfolgenden Vermittlungsstellen verfahren ebenso. Die letzte Vermittlungsstelle ist eine reine Teilnehmervermittlungsstelle, die außer dem Bündel zur übergeordneten Vermittlungsstelle nur Leitungen zu Teilnehmern hat. Diese Vermittlungsstelle liest nach dem Zielbeginnzeichen immer zwei Oktetts, vernichtet sie und sendet das Nachfolgende auf die Leitung des durch die beiden Oktetts bezeichneten Teilnehmers.

Die Phrasen P können in Teile von beispielsweise 8 ms ($=64$ Oktetts) unterteilt werden. Jede Phrase P besteht dann aus beliebig vielen solcher Teile. Bei der Übertragung werden die Teile unmittelbar aneinandergefügt. Zeigt der Sprachdetektor auf der Sendeseite an, daß die Phrase P beendet ist, so werden dem Ende des laufenden 8-ms-Teiles (oder einem der folgenden 8-ms-Teile, wenn das wegen der Sprachdetektion erforderlich ist) mindestens zwei Oktetts 11111111 angefügt, die das Ende der Phrase P den nachfolgenden Vermittlungsstellen anzeigen. Sollte das analoge Sprachsignal auf der Sendeseite zufällig am Anfang eines 8-ms-Teiles die Übertragung zweier Oktetts 11111111 erfordern, wodurch ein Phrasenendekriterium vorgetäuscht würde, so verändert die erste Vermittlung beim zweiten Oktett das Bit mit der geringsten Wertigkeit von 1 auf 0. Der dadurch entstehende Fehler in der Sprachübertragung ist selten und vernachlässigbar. Am Ende einer Phrase P sendet jede Vermittlungsstelle so lange Oktetts 11111111 auf die Leitung, bis sie eine neue Phrase P — meist von einem anderen Dialog, d. h. für eine andere virtuelle Verbindung — übertragen will. Die empfangende Endermittlungsstelle sendet während der erkannten Sprechpause Oktetts mit der Bedeutung »kein Sprachsignal« auf die Teilnehmerleitung, z. B. bei PCM 00000000.

Man könnte auch festlegen, zwischen den Phrasen P nicht nur mindestens zwei Oktetts 11111111 einzufügen, sondern eine größere Anzahl. Dadurch würde es zunehmend unwahrscheinlicher, daß im Sprachsignal zufällig diese kombination vorkommt und ein Phrasenendkriterium vortäuscht. Nimmt man beispielsweise 16 Oktetts 11111111 an, brauchte man diese Phrasenendekriterium nicht mehr zu schützen und könnte auch auf die Unterteilung der Phrase P in 8-ms-Teile verzichten.

Die Phrasen P eines Dialoges von Teilnehmer zur Teilnehmer müssen alle dieselben Laufzeit aufweisen. Daher ist sicherzustellen, daß die Durchlaufzeit durch eine Vermittlungsstelle für alle Phrasen P des Dialoges gleich ist. Die Durchlaufzeit ist mindestens von der Dauer, die benötigt wird, um die erste Leitungsbündel-Kennung zu lesen, eine freie Leitung zu suchen und auf diese weiterzuschalten. Ist gerade keine Leitung frei, so darf die Phrase P nicht zusätzlich verzögert werden. Vielmehr ist der erste 8-ms-Teil der Phrase zu unterdrücken. Die Phrase P wird nun zeitrichtig, möglichst mit ihrem zweiten 8-ms-Teil ausgesendet. Ist auch dann keine Leitung frei, so wird auch der zweite 8-ms-Teil unterdrückt und zeitrichtig mit dem dritten Teil begonnen usw. In jedem Fall werden aber auch bei verkürzter Phrase P die noch abzuarbeitenden Leitungsbündel-Kennungen und das Zielbeginnzeichen vorangestellt. Die Vermittlungsstelle orientiert sich dabei an dem Zielbeginnzeichen.

Wenn zwischen den Phrasen P nicht nur zwei, sondern mindestens 16 Oktetts 11111111 gesendet werden, so sind — wenn gerade keine Leitung frei ist — nur so viele Oktetts zu unterdrücken, wenn sie der Dauer entsprechen, in der die Phrase auf eine freie Leitung warten muß.

In diesem Fall könnte man auch auf ein Zielbeginnzeichen verzichten. Kann eine Phrase P in einer Vermittlungsstelle nicht weitergeleitet werden, weil gerade keine Leitung des Bündels frei ist, so sind immer 16 Oktetts zwischenzuspeichern und auszugeben, sobald eine Leitung frei ist. Anschließend ist der Rest der Phrase P zeitrichtig anzufügen. In den 16 Oktetts sind immer die Leitungsbündel-Kennungen enthalten.

Die virtuelle Verbindung $V_V$ läßt sich vorteilhafterweise auch über die Endvermittlungsstelle hinaus bis in eine Nebenstellenanlage oder bis zum Teilnehmer fortsetzen, indem die Funktionen Sprachpausenerkennung, Bildung von Phrasen P sowie bei großen Nebenstellenanlagen auch Sprachinterpolation dorthin verlegt werden und Auf- und Abbau der virtuellen Verbindung $V_V$ zur Nebenstellenanlage bzw. zum Teilnehmer verlagert werden.

Das angegebene Verfahren ist praktisch unabhängig von der Art der Sprachcodierung. Es ist nicht nur möglich, mit PCM und den verschiedenen DPCM zusammenzuarbeiten, sondern es ist auch möglich, dieses Verfahren auf höherwertige Sprachcodierungsverfahren auszudehnen, bei denen die analoge Sprache je nach der momentanen Eigenschaft des Sprachsignals mit mehr oder weniger Bits je Abtastwert codiert wird. Wenn man auch in den Sprechpausen die von einem Mikrophon abgegebenen Signale mit kleiner Bitrate codiert, müßte es bei Einführung weiterer netzeinheitlicher Leitungsgeschwindigkeiten möglich sein, Hintergrundinformation anstelle einer Sprechpause zu übertragen.

Die virtuelle Verbindung $V_V$ wird dadurch ausgelöst bzw. abgebaut, daß die Vermittlungsstelle des auslösenden Teilnehmers einen dem Beginn-Quittungs-Frame entsprechenden Auslöse-Frame aussendet, der alle Durchgangsvermittlungsstellen durchläuft und von der Vermittlungsstelle des anderen Teilnehmers empfangen und quittiert wird. Alle Vermittlungsstellen löschen nacheinander die entsprechenden Speicher-Einträge.

Zur Überwachung einer virtuellen Verbindung $V_V$ wird — wie an sich bekannt — bei jeder neuen Phrase P in jeder Vermittlung ein Zeitglied in seinem Zustand »Null« gesetzt. Läuft das Zeitglied ab, ohne daß eine Phrase P in einer der beiden Richtungen übertragen wird, wird die Verbindung ausgelöst, indem dem rufenden oder beiden Teilnehmern Auslöse-Frames gesendet werden.

Bei Sprachinterpolationssystemen wird mit einer bestimmten Wahrscheinlichkeit der Beginn einer Phrase P deswegen unterdrückt, weil gerade keine Leitung des Bündels frei ist.

Werden mehrere Abschnitte hintereinandergeschaltet, so erhöht sich diese Wahrscheinlichkeit entsprechend. Bei Verbindungen mit einem oder wenigen Abschnitten ist die Wahrscheinlichkeit kleiner als bei Verbindungen mit vielen Abschnitten. Dies kann in etwa ausgeglichen werden, indem die (dann immer erforderliche) Angabe im Zielbeginnzeichen über die noch vorhandenen Oktetts in Zielkennungsfolge Z als Prioritätskennzeichen verwendet wird und Phrasen P mit vielen Oktetts bei der Leitungszuteilung gegenüber solchen mit wenigen Oktetts bevorzugt werden, indem beispielsweise für Verbindungen mit vielen Oktetts eine bestimmte Kapazität freigehalten wird. Unabhängig davon sollten die Bündel nicht so stark wie bei TASI mit nur einem Abschnitt ausgenutzt werden.

Fig. 2 und Fig. 3 zeigen, wie bereits erläutert, jeweils schematisch den Aufbau einer ersten bzw. einer zweiten Aufbaudatenfolge D' bzw. D''. Dabei ist mit W die Wählinformation bezeichnet, die die Zielvermittlungsstellen-Kennung $KVSt_B$ und die Zielteilnehmer-Kennung KB enthält. Mit I ist die Identifikationsinformation bezeichnet, die die Ursprungsvermittlungsstellen-Kennung $KVSt_A$ und die Ursprungsteilnehmer-Kennung KA enthält. Mit $A - D_1 - D_2$ sind Leitungsbündel-Kennungen bezeichnet.

Fig. 4 zeigt, wie ebenfalls bereits erläutert, schematisch den Aufbau einer Sprachinformation S, wobei mit Z die Zielkennungsfolge, mit P die Phrase und mit E eine Endekennung bezeichnet ist.

## Patentansprüche

1. Fernsprechvermittlungsnetz zur digitalen Sprachübertragung, bei dem eine von einem Ursprungsteilnehmer (A) in eine Ursprungsvermittlungsstelle ($VST_A$) eingegebene Wählinformation (W) dazu verwendet wird, eine von der Ursprungsvermittlungsstelle ($VST_A$) ausgehende, im Bedarfsfalle über eine oder mehrere Durchgangsvermittlungsstellen ($VST_{D1} \ldots VST_{Dn}$) verlaufende und bis zu einer Zielvermittlungsstelle ($VST_B$), an die ein betreffender Zielteilnehmer (B) angeschlossen ist, reichende virtuelle Verbindung ($V_V$) aufzubauen, dadurch gekennzeichnet, daß eine zu übertragende Sprachinformation (S) in Phrasen (P), d. h. in dem Redefluß angepaßte Sprachabschnitte, eingeteilt und jeweils eine Phrase (P) in Form eines Informationsblocks mit einer vorangestellten Zielkennungsfolge (Z), die Angaben über jeweils zu durchlaufende virtuelle Teilverbindungen ($V_T$) enthält, und mit einer an das Ende der Phrase (P) gestellten und deren Ende signalisierenden Endekennung (E) über die jeweils für eine betreffende aktuelle Phrase (P) zwischen zwei Vermittelungsstellen aufgebaute reale Teilverbindung ($V_R$) zeitrichtig übertragen wird, daß die Phrasen (P) durch eine geeignete Rasterung unterteilt werden, wobei jede Phrase aus beliebig vielen solcher Rasterabschnitte bestehen kann, daß diese Rasterabschnitte unmittelbar aneinandergefügt werden, daß jeweils vollständige Rasterabschnitte einer aktuellen Phrase (P) unterdrückt werden, wenn keine reale Leitung zeitgerecht zur Verfügung steht, daß von dem Augenblick an, zu dem eine reale Leitung zur Verfügung steht, der Rest der Phrase (P) zeitrichtig mit Beginn eines neuen Zeitrasterabschnittes übertragen wird und daß die virtuelle Verbindung ($V_V$) nach Beendigung des Gesprächs abgebaut wird.

2. Fernsprechvermittlungsnetz zur digitalen Sprachübertragung nach Anspruch 1, dadurch gekennzeichnet, daß die Rasterung aus Rasterabschnitten der Dauer von 8 ms, entsprechend 64 Oktetts, besteht.

3. Fernsprechvermittlungsnetz zur digitalen Sprachübertragung, bei dem eine von einem Ursprungsteilnehmer (A) in eine Ursprungsvermittlungsstelle ($VST_A$) eingegebene Wählinformation (W) dazu verwendet wird, eine von der Ursprungsvermittlungsstelle ($VST_A$) ausgehende, im Bedarfsfalle über eine oder mehrere Durchgangsvermittlungsstellen ($VST_{D1} \ldots VST_{Dn}$) verlaufende und bis zu einer Zielvermittlungsstelle ($VST_B$), an die ein betreffender Zielteilnehmer (B) angeschlossen ist, reichende virtuelle Verbindung ($V_V$) aufzubauen, dadurch gekennzeichnet, daß eine zu übertragende Sprachinformation (S) in Phrasen (P), d. h. in dem Redefluß angepaßte Sprachabschnitte, eingeteilt und jeweils eine Phrase (P) in Form eines Informationsblocks mit einer vorangestellten Zielkennungsfolge (Z), die Angaben über jeweils zu durchlaufende virtuelle Teilverbindungen ($V_T$) enthält, und mit einer an das Ende der Phrase (P) gestellten und deren Ende signalisierenden Endekennung (E) über die jeweils für eine betreffende aktuelle Phrase (P) zwischen zwei Vermittelungsstellen aufgebaute reale Teilverbindung ($V_R$) zeitrichtig übertragen wird, daß jeweils 16 Oktetts einer aktuellen, augenblicklichen nicht übertragbaren Phrase (P) zwischengespeichert werden, daß sobald eine Leitung zur Verfügung steht, diese 16 zwischengespeicherten Oktetts übertragen werden, daß anschließend an die Übertragung der 16 zuvor zwischengespeicherten Oktetts der aktuelle Rest der Phrase (P) zeitrichtig entsprechend dem Zeitraster angefügt und übertragen wird die virtuelle Verbindung ($V_V$) nach Beendigung des Gesprächs abgebaut wird.

4. Fernsprechvermittlungsnetz nach Anspruch 1, 2 oder 3, dadurch gekennzeichnet, daß zum Aufbauen der virtuellen Verbindung ($V_V$) zunächst aufgrund eines die Zielvermittlungsstelle ($VST_B$) bestimmenden Teils der Wählinformation (W), nämlich einer Zielvermittlungsstellen-Kennung ($KVST_B$), eine Leitwegsuche durchgeführt wird, bei der ein Leitungsbündel, über das die Ursprungsvermittlungsstelle ($VST_A$) mittelbar mit der Zielvermittlungsstelle ($VST_B$) verbindbar ist oder unmittelbar mit dieser verbunden ist und in dem zum Zeitpunkt des Beginns der Leitwegsuche Sprachübertragungskapazität frei ist, ausgesucht wird, daß die Ursprungsvermittlungsstelle ($VST_A$) über eine freie Leitung des ausgesuchten Leitungsbündels, das zu einer Durchgangsvermittlungsstelle ($VST_{D1}$) oder zu der Zielvermittlungsstelle ($VST_B$) führt, eine Aufbaudatenfolge (D') an diese Durchgangsvermittlungsstelle ($VST_{D1}$) oder an die Zielvermittlungsstelle ($VST_B$) sendet, wobei die Aufbaudatenfolge (D') die Wählinformation (W) in Form der Zielvermittlungsstellen-Kennung ($KVST_B$) und einer Zielteilnehmer-Kennung (KB) sowie eine Identifikationsinformation (I) in Form einer Ursprungsvermittlungsstellen-Kennung ($KVST_A$) und einer Ursprungsteilnehmer-Kennung (KA) sowie eine das ausgesuchte Leitungsbündel betreffende Leitungsbündel-Kennung ($A-D_1$) enthält, daß falls das ausgesuchte Leitungsbündel nicht unmittelbar zu der Zielvermittlungsstelle ($VST_B$), sondern zu der Durchgangsvermittlungsstelle ($VST_{D1}$) führt, diese aufgrund der Zielvermittlungsstellen-Kennung ($KVST_B$) innerhalb der Wählinformation (W) eine Leitwegsuche durchführt, bei der ein weiteres Leitungsbündel, über das die erste Durchgangsvermittlungsstelle ($VST_{D1}$) mittelbar über eine weitere Durchgangsvermittlungsstelle ($VST_{D2}$) mit der Zielvermittlungsstelle ($VST_B$) verbindbar ist oder unmittelbar mit dieser verbunden ist und in dem zum Zeitpunkt des Beginns dieser Leitwegsuche Sprachübertragungskapazität frei ist, ausgesucht wird, daß die erste Durchgangsvermittlungsstelle ($VST_{D1}$) über eine freie Leitung des ausgesuchten Leitungsbündels, das zu der weiteren Durchgangsvermittlungsstelle ($VST_{D2}$) oder zu der Zielvermittlungsstelle ($VST_B$) führt, eine weitere Aufbaudatenfolge (D'') an die zweite Durchgangsvermittlungsstelle ($VST_{D2}$) oder die Zielvermittlungsstelle ($VST_B$) sendet, wobei die weitere Aufbaudatenfolge (D'') die Wählinformation (W) in Form der Zielvermittlungsstellen-Kennung ($KVST_B$) und der Zielteilnehmer-Kennung (KB) sowie die Identifikations-Kennung (I) in Form der Ursprungsvermittlungsstellen-Kennung ($KVST_A$) und der Ursprungsteilnehmer-Kennung (KA) sowie die erste Leitungsbündel-Kennung ($A-D_1$) und eine weitere Leitungsbündel-Kennung ($D_1-D_2$ bzw. $D_1-VST_B$) enthält, daß jeweils bei Durchlaufen einer weiteren Durchgangsvermittlungsstelle ($VST_{D3}...VST_{Dn}$) eine weitere Leitwegsuche durchgeführt wird und jeweils die das ausgesuchte Leitungsbündel betreffende Leitungsbündel-Kennung an die jeweils bereits bestehende Aufbaudatenfolge angefügt wird, daß die Zielvermittlungsstelle ($VST_B$) die an sie gerichtete, von der im Verbindungszug vor ihr liegenden Durchgangsvermittlungsstelle (z. B. $VST_{D2}$) oder unmittelbar von der Ursprungsvermittlungsstelle ($VST_A$) gesendete Aufbaudatenfolge (z. B. D'') speichert und ein die gesamte Information der bis zum Erreichen der Zielvermittlungsstelle entstandenen Aufbaudatenfolge (z. B. D'') enthaltendes Quittungstelegramm über alle Durchgangsvermittlungsstellen ($VST_{D1}...VST_{Dn}$) an die Ursprungsvermittlungsstelle ($VST_A$) zurücksendet, wo diese Information ebenfalls gespeichert wird, und daß die realen Teilverbindungen jeweils ausgelöst werden, nachdem zuvor in jeder betreffenden Durchgangsvermittlungsstelle ($VST_{D1}$, $VST_{D2}$) die jeweils gesendete Aufbaudatenfolge (z. B. D'') bzw. das Quittungstelegramm gespeichert worden ist.

5. Fernsprechvermittlungsnetz nach Anspruch 1, 2 oder 3, dadurch gekennzeichnet, daß jeweils sendeseitig ein der einem Teil der betreffenden Sprechverbindung bildenden Leitung an geeigneter Stelle, beispielsweise in einer ersten Gruppenwahlstufe der Ursprungsvermittlungsstelle ($VST_A$) bzw. der Zielvermittlungsstelle ($VST_B$), fest oder bedarfsweise zugeordneter Sprachdetektor vorgesehen ist, der in der Lage ist, Sprechpausen zu erkennen und daraufhin die Phrasen (P) zu bilden.

6. Fernsprechvermittlungsnetz nach Anspruch 1, 2, 3 oder 5, dadurch gekennzeichnet, daß das eine Phrase (P) bildende codierte Sprachsignal nur in der jeweils dem sendenden Teilnehmer am nächsten liegenden Vermittlungsstelle, nämlich entweder in der Ursprungsvermittlungsstelle ($VST_A$) oder für Sprachübertragung in Gegenrichtung in der Zielvermittlungsstelle ($VST_B$), für eine vorbestimmte Zwischenspeicherzeit von beispielsweise 15 ms zwischengespeichert wird, in welcher Zwischenspeicherzeit die der zu sendenden Phrase (P) voranzustellende und zuvor bei dem Verbindungsaufbau gebildete Zeilkennungsfolge (Z) gebildet und ausgesendet wird.

7. Fernsprechvermittlungsnetz nach Anspruch 6, dadurch gekennzeichnet, daß die Zwischenspeicherzeit so groß gewählt wird, daß eine Karenzzeit entsteht, innerhalb derer eine Unterscheidungsmöglichkeit zwischen Sprache einerseits und Knackgeräuschen andererseits gegeben ist.

8. Fernsprechvermittlungsnetz nach Anspruch 7, dadurch gekennzeichnet, daß, nachdem der Sprachdetektor das Ende der aktuellen Phrase (P) erkannt hat und damit einhergehend die Übertragung dieser Phrase (P) abgeschlossen ist, oktettweise ein Ruhekennzeichen, beispielsweise der Form 11111111 übertragen wird.

9. Fernsprechvermittlungsnetz nach Anspruch 8, dadurch gekennzeichnet, daß zumindest zwei Oktetts des Ruhekennzeichens als Endekennung an die betreffende Phrase (P) angefügt werden.

10. Fernsprechvermittlungsnetz nach Anspruch 8, dadurch gekennzeichnet, daß jede der sendenden Vermittlungsstellen (VST$_A$ bzw. VST$_B$) jeweils nach dem Ende einer Phrase (P) solange das Ruhekennzeichen, beispielsweise Form 11111111, auf die betreffende Leitung gibt, bis eine neue Phrase (P) zu übertragen ist.

11. Fernsprechvermittlungsnetz nach Anspruch 10, dadurch gekennzeichnet, daß die jeweils empfangende Endvermittlungsstelle (beispielsweise VST$_B$) während einer Sprechpause auf die an sie angeschlossene, die betrachtete Sprechverbindung betreffende Teilnehmerleitung eine Pausenkennung oktettweise, beispielsweise in der Form 00000000, abgibt.

12. Fernsprechvermittlungsnetz nach einem der vorhergehenden Ansprüche, dadurch gekennzeichnet, daß sich für eine Phrase (P) mit einer überdurchschnittlichen Anzahl von Oktetts in der Zielkennungsfolge (Z) eine Priorität ergibt, auf Grund derer eine derartige Phrase (P) bei dem jeweils aktuellen Aufbau einer realen Verbindung bevorzugt berücksichtigt wird.

13. Fernsprechvermittlungsnetz nach einem der vorhergehenden Ansprüche, dadurch gekennzeichnet, daß ein Zielbeginnzeichen vorgesehen ist und daß in dem Zielbeginnzeichen an dessen Anfang eine Information über die Länge der Zielinformation vorgesehen ist.

14. Fernsprechvermittlungsnetz nach einem der vorhergehenden Ansprüche, dadurch gekennzeichnet, daß der Aufbau der Zielkennungsfolge (Z) derart vorgesehen ist, daß sich die Zielkennungsfolge (Z) von einem Oktett der Form 11111111 in mindestens 2 bit unterscheidet.

15. Fernsprechvermittlungsnetz nach einem der vorhergehenden Ansprüche, dadurch gekennzeichnet, daß in der Zielkennungsfolge (Z) eine Dienstkennung enthalten ist.

16. Fernsprechvermittlungsnetz nach einem der vorhergehenden Ansprüche, dadurch gekennzeichnet, daß die Aufbaudatenfolgen (D', D'') mit einem Sicherungsbit, beispielsweise mit einem Paritätsbit, gesichert sind.

17. Fernsprechvermittlungsnetz nach Anspruch 14, dadurch gekennzeichnet, daß die in der Zielkennungsfolge (Z) enthaltende Angabe über die Anzahl der in der Zielkennungsfolge (Z) enthaltenen Oktetts jeweils nach dem Verbrauch und der anschließenden Vernichtung eines Oktetts um 1 verringert wird.

18. Fernsprechvermittlungsnetz nach Anspruch 2, dadurch gekennzeichnet, daß die Zielteilnehmer-Kennung (KB) und die Ursprungsteilnehmer-Kennung (KA) jeweils aus zwei Oktetts bestehen und daß in den Oktetts für die Zielteilnehmer-Kennung (KB) und die Ursprungsteilnehmer-Kennung (KA) die Oktetts der Form 00000000 und 11111111 sowie Oktetts, die in dem Fernsprechvermittlungsnetz in den virtuellen Verbindungen anderweitig verwendet werden, nicht vorkommen.

19. Fernsprechvermittlungsnetz nach Anspruch 2, dadurch gekennzeichnet, daß jedes Leitungsbündel in der Aufbaudatenfolge (D', D'') jeweils lokal unabhängig bezeichnet wird und daß die betreffende Leitungsbündel-Kennung (z. B. A−D$_1$) durch vorzugsweise zwei Oktetts bezeichnet ist.

20. Fernsprechvermittlungsnetz nach Anspruch 1 oder 2, dadurch gekennzeichnet, daß eine virtuelle Verbindung (V$_V$) auch über eine Zielvermittlungsstelle (VST$_B$) hinaus in eine nachgeordnete Nebenstellenvermittlungsanlage mit Durchwahl aufgebaut wird.

## Claims

1. A telephone switching network for digital speech transmission, wherein an item of dialling information (W) input into an original exchange (VST$_A$) by an original subscriber (A) is used to establish a virtual connection (V$_V$) which emanates from the original exchange (VST$_A$) and which where necessary extends via one or more transit exchanges (VST$_{D1}$ ... VST$_{Dn}$) and extends to a target exchange (VST$_B$) to which a relevant target subscriber (B) is connected, characterised in that an item of speech information (S) which is to be transmitted is divided into phrases (P), i. e. speech sections matched to the speech flow and a phrase (P), in the form of an information block comprising a preceding target code sequence (Z) which contains information concerning virtual subsidiary connections (V$_T$) which are to be passed through and comprising an end code (E) which is attached to the end of the phrase (P) and signals the end thereof, is in each case promptly transmitted via the real subsidiary connection (V$_R$) established between two exchanges for a relevant current phrase (P), that the phrases (P) are divided up by suitable rastering, where each phrase can comprise an arbitrary number of such raster sections, that these raster sections are directly attached to one another, that complete raster sections of a current phrase (P) are suppressed when no real line is promptly available, that from the time at which a real line is available the remainder of the phrase (P) is promptly transmitted at the beginning of a new time raster section, and that the virtual connection (V$_V$) is disestabilised at the end of the conversation.

2. A telephone switching network for digital speech transmission as claimed in claim 1, characterised in that the raster comprises raster sections whose duration amounts to 8 ms. corresponding to 64 octets.

3. A telephone switching network for digital speech transmission, wherein an item of dialling information (W) input into an original exchange (VST$_A$) by an original subscriber (A) is used to establish a virtual connection (V$_V$) which emanates from the original exchange (VST$_A$) and which extends when necessary via one or more than one transit exchange (VST$_{D1}$ ... VST$_{Dn}$) and extends to a target exchange (VST$_B$) to which a relevant target subscriber (B) is connected, characterised in that an item of speech information (S) which is to be connected is divided into phrases (P), i. e. speech sections adaptet to the speech flow and a phrase (P), in the form of an information block comprising a preceding target code sequence (Z) the information concerning virtual subsidiary connections (V$_T$) which are to be passed through and comprising an end code (E) which is attached to the end of the phrase (P) and signals the end thereof, is in each case promptly transmitted via the real subsidiary connection (V$_R$) which is established between two exchanges for a relevant current phrase (P), that sixteen octets of a current, instantaneously nontransmissible phrase (P) are intermediately stored, that as soon as a line is available these sixteen intermediately stored octets are transmitted, that following the transmission of the sixteen previously intermediately stored octets the current remainder of the phrase (P) is promptly attached in accordance with the time raster and is transmitted, and that the virtual connection (V$_V$) is disestabilished at the end of the conversation.

4. A telephone switching network as claimed in claim 1, characterised in that for the establishment of the virtual connection (V$_V$) firstly a route-finding operation is carried out on the basis of a portion of the dialling information (W) which specifies the target exchange (VST$_V$), namely a target exchange code (KVST$_B$), wherein a group of lines is selected via which the original exchange (VST$_A$) can be indirectly connected to the target exchange (VST$_B$) or is directly connected thereto and in which speech transmission capacity is available at the start of the route-finding operation, that via a free line of the selected line group which leads to a transit exchange (VST$_{D1}$) or to a target exchange (VST$_B$), the original exchange (VST$_A$) transmits an establishment data sequence (D') to this transit exchange (VST$_{D1}$) or to the target exchange (VST$_B$), where the establishment data sequence (D') includes the dialling information (W) in the form of the target exchange code (KVST$_V$) and a target subscriber code (KB), further includes an item of identification information (I) in the form of an original exchange code (KVST$_A$) and an original subscriber code (KA), and further includes a line group code (A−D$_1$) relating to the selected line group, that if the selected line group does not lead directly to the target exchange (VST$_B$) but leads to the transit exchange (VST$_{D1}$), then, on the basis of the target exchange code (KVST$_B$) within the dialling information (W), said transit exchange carries out a route-finding operation wherein a further line group is selected via which the first transit exchange (VST$_{D1}$) can be indirectly connected via a further transit exchange (VST$_{D2}$) to the target exchange (VST$_B$) or is directly connected thereto and in which speech transmission capacity is available at the start of this route-finding operation, that via a free line of the selected line group which leads to the further transit exchange (VST$_{D2}$) or to the target exchange (VST$_B$), the first transit exchange (VST$_{D1}$) transmits a further establishment data sequence (D'') to the second transit exchange (VST$_{D2}$) or to the target exchange (VST$_B$), where the further establishment data sequence (D'') includes the dialling information (W) in the form of the target exchange code (KVST$_B$) and the target subscriber code (KB), further includes the identification code (I) in the form of the original exchange code (KVST$_A$) and the original subscriber code (KA), and further includes the first line group code (A−D$_1$) and a further line group code (D$_1$−D$_2$ and D$_1$−VST$_B$), that whenever a further transit exchange (VST$_{D3}$ ... VST$_{Dn}$) is passed through, a further routefinding operation is performed and the line group code relating to the selected line group is attached to the already existing establishment data sequence, that the target exchange (VST$_B$) stores the establishment data sequence (e. g. D'') which is directed towards it and which is transmitted from the preceding transit exchange (e. g. VST$_{D2}$) in the connection path or is directly transmitted from the original exchange (VST$_A$), and transmits an acknowledgement telegram, containing the entire information of the establishment data sequence (e. g. D'') which has been formed by the time the target exchange has been reached, across all the transit exchanges (VST$_{D1}$ ... VST$_{Dn}$) to the original exchange (VST$_A$) where this information is likewise stored, and that the real subsidiary connections are released when the transmitted establishment data sequence (e. g. D'') or the acknowledgement telegram has ben previously stored in each relevant transit exchange (VST$_{D1}$, VST$_{D2}$).

5. A telephone switching network as claimed in claim 1, 2 or 3, characterised in that at the transmitting end there is in each case arranged a speech detector which is assigned, permanently or as and when required, at a suitable point, for example in a first group selection stage of the original exchange (VST$_A$) or the target exchange (VST$_B$) to the line which forms part of the relevant speech connection, and which speech detector is capable of recognising speech intervals and then forming the phrases (P).

6. A telephone switching network as claimed in claim 1, 2, 3 or 5, characterised in that the coded speech signal which forms a phrase (P) is intermediately stored for a specified intermediate storage time of for example 15 ms only in the exchange which lies closest to the transmitting subscriber, that is either in the original exchange (VST$_A$) or, for speech transmission in the opposite direction, in the target exchange (VST$_B$), in which intermediate storage time the target code sequence (Z) which is to precede the phrase (P) to be transmitted and which has been previously formed during the connection establishment is formed and transmitted.

7. A telephone switching network as claimed in claim 6, characterised in that the length of the intermediate storage time is elected to be such that a waiting time occurs within which it is possible to differentiate between speech on the one hand and clicking noises on the other hand.

8. A telephone switching network as claimed in claim 7, characterised in that when the speech detector has recognised the end of the current phrase (P) and thus has terminated the transmission of this phrase (P), a rest characteristic is transmitted octet-wise, for example in the form 11111111.

9. A telephone switching network as claimed in claim 8, characterised in that at least two octets of the rest characteristic are attached, as end code, to the relevant phrase (P).

10. A telephone switching network as claimed in claim 8, characterised in that at the end of a phrase (P) each of the transmitting exchanges (VST$_A$ and VTS$_B$) transmits the rest characteristic, for example in the form 11111111, to the relevant line until a new phrase (P) is to be transmitted.

11. A telephone switching network as claimed in claim 10, characterised in that during a speech interval the particular receiving end exchange (for example VST$_B$) transmits an interval code octet-wise, for example in the form 00000000, to the subscriber line which is connected thereto and which relates to the relevant speech connection.

12. A telephone switching network as claimed in one of the preceding claims, characterised in that a phrase (P) having an above-average number of octets in the target code sequence (Z) receives priority on the basis of which a phrase (P) of this kind is given preferred consideration in the current estabilishment of a real connection.

13. A telephone switching network as claimed in one of the preceding claims, characterised in that a target start characteristic is provided and that at the beginning of the target start characteristic there is provided an item of information concerning the length of the target information.

14. A telephone switching network as claimed in one of the preceding claims, characterised in that the establishment of the target code sequence (Z) is such that the target code sequence (Z) differs from an octet of the form 11111111 in at least two bits.

15. A telephone switching network as claimed in one of the preceding claims, characterised in that a service code is contained in the target code sequence (Z).

16. A telephone switching network as claimed in one of the preceding claims, characterised in that the estblishment data sequences (D', D'') are safeguarded by a safeguarding bit, for example a parity bit.

17. A telephone switching network as claimed in claim 14, characterised in that the information which relates to the number of octets contained in the target code sequence (Z) and which is itself contained in the target code sequence (Z) is reduced by one following the use and subsequent nullification of an octet.

18. A telephone switching network as claimed in claim 2, characterised in that the target subscriber code (KB) and the original subscriber code (KA) each comprise two octets, and that octets of the form 00000000 and 11111111 and octets which are used in other ways in the telephone switching network in the virtual connections do not occur in the octets for the target subscriber code (KB) and the original subscriber code (KA).

19. A telephone switching network as claimed in claim 2, characterised in that each line group in the establishment data sequence (D', D'') is independently designated locally, and that the line group code (e. g. A $-$ D$_1$) in question is designated by preferably two octets.

20. A telephone switching network as claimed in claim 1 or 2, characterised in that a virtual connection (V$_V$) is also established beyond a target exchange (VST$_B$) into a subsidiary PBX exchange with direct dialling.

**Revendications**

1. Réseau de commutation téléphonique pour la transmission numérique de la parole, dans lequel une information de sélection (W), introduite par un abonné de départ (A) dans un central de départ (VST$_A$), est utilisée pour établir une liaison virtuelle (V$_V$) partant du central d'origine (VST$_A$), acheminée en cas debesoin par l'intermédiaire d'un ou de plusieurs centraux de transit (VST$_{D1}$ . . . VST$_{Dn}$) et aboutissant à un central de destination (VST$_V$), auquel est raccordé l'abonné de destination considéré (B), caractérisé par le fait qu'une information de conversation (S) devant être transmise est subdivisée en phrases (P), c'est-à-dire en des éléments de conversation adaptés au flux de la parole, et qu'une Phrase (P) est transmise d'une manière correcte dans le temps sous la forme d'un bloc d'informations avec une suite (Z) formant indicatif de destination, qui est réglée préalablement et qui contient des indications concernant des liaisons partielles virtuelles (V$_T$) devant être acheminées, et avec un indicatif de fin (T) positionné au niveau de la fin de la phrase (P) et signalant la fin de cette dernière, par l'intermédiaire de la liaison partielle réelle (V$_R$) établie respectivement pour une phrase actuelle concernée (P) entre deux centraux, que les phrases (P) sont subdivesées au moyen d'une subdivision appropriée en trames, chaque phrase pouvant être constituée par un nombre quelconque de tels éléments de trame, que ces éléments de trame se succèdent directement les uns aux autres, que des éléments de trame complets d'une phrase actuelle (P) sont supprimés loprsqu'aucune ligne réelle n'est disponible en temps opportun, et qu'à l'instant où une ligne réelle est disponible, le reste de la phrase (P) est transmis d'une manière correcte dans le temps au début d'un nouvel élément de trame temporelle et que la liaison virtuelle ($V_V$) est supprimée à la fin de la conversation.

2. Réseau de commutation téléphonique pour la transmission numérique de la parole suivant la revendication 1, caractérisé par le fait que la subdivision en trames s'effectue selon des éléments de trame d'une durée de 8 ms, correspondant à 64 octets.

3. Réseau de commutation téléphonique pour la transmission numérique de la parole, dans lequel une information de sélection, introduite par un abonné de départ (A) dans un central de départ ($VST_A$), est utilisée pour établir une liaison virtuelle ($V_V$) partant du central d'origine ($VST_A$), acheminée en cas de besoin par l'intermédiaire d'un ou de plusieurs centraux de transit ($VST_{D1}$ ... $VST_{Dn}$) et s'étendant jusqu'à un central de destination ($VST_V$), auquel est raccordé l'abonné de destination consiodéré (B), caractérisé par le fait qu'une information de conversation devant être transmise est subdivisée en phrases (P), c'est-à-dire en des éléments de conversation adaptés au flux de la parole, et que respectivement 16 octets d'une phrase actuelle (P) non transmise instantanément sont mémorisés temporairement, que dès qu'une ligne est disponible, ces octets mémorisés temporariment sont transmis et que le reste actuel de la phrase (P) est ajouté et est transmis de façon correcte dans le temps, conformément à la trame temporelle, à la suite de la transmission des 16 octets mémorisés temporairement, et que la liaison virtuelle ($V_V$) est supprimée à la fin de la conversation.

4. Réseau de commutation téléphonique suivant la revendication 1, 2 ou 3, caractérisé par le fait que pour l'établiassement de la liaison virtuelle ($V_V$), on effectue tout d'abord, sur la base d'une partie, déterminat le central de destination ($VST_B$), de l'information de sélection (W), c'est-à-dire d'un indicatif ($KVST_B$) du central de destination, une recherche de voies d'acheminement lors de laquelle se trouve séléctionné un faisceau de lignes, par l'intermédiaire desquels le central de départ ($VST_A$) peut être relié indirectement au central de destination ($VST_B$) ou est relié directement à ce dernier et dans lequel il existe une possibilité de transmission de la parole à l'instant du début de la recherche de voies d'acheminement, que le central d'origine ($VST_A$) émet par l'intermédiaire d'une ligne libre du faisceau de lignes sélectionné, qui aboutit à un central de transit ($VST_{D1}$) ou au central de destination ($VST_B$), une suite (D') de données d'établissement de liaison à ce central de transit ($VST_{D1}$) ou en direction du central de destination ($VST_B$), la suite (D') de données d'établissement de liaison contenant l'information de sélection (W) sous la forme de l'indicatif ($VST_B$) du central de destination et d'un indicatif (KB) de l'abonné de destination ainsi qu'une information d'identification (I) sous la forme d'un indicatif ($KVST_A$) du central d'origine et d'un indicatif (KA) de l'abonné d'origine ainsi qu'un indicatif ($A-D_1$) du faisceau de lignes concernant le faisceau de lignes sélectionné, que dans le cas où le faisceau de lignes sélectionné n'aboutit pas directement au central de destination ($VST_B$), mais au central de transit ($VST_{D1}$), ce dernier exécute, sur la base de l'indicatif ($KVST_B$) du central de destination contenu à l'intérieur de l'information de sélection (W) une recherche de voies d'acheminement, lors de laquelle se trouve sélectionné un autre faisceau de lignes, par l'intermédiaire duquel le premier central de transit ($VST_{D1}$) peut être relié in directement par l'intermédiaire d'un autre central de transit ($VST_{D2}$) au central de destination ($VST_B$) ou est relié directement à ce dernier et dans lequel il existe une libre possibilité de transmission de la parole à l'instant du début de cette recherche de voies d'acheminement, que le premier central de transit ($VST_{D1}$) émet par l'intermédiaire d'une ligne libre du faisceau de lignes sélectionné, qui aboutit à l'autre central de transit ($VST_{D2}$) ou au central de destination ($VST_B$), une autre suite (D") de données détablissement de liaison ou secound central de transit ($VST_{D2}$) ou are central de destination ($VST_B$), l'autre suite (D") d'établissement de liaison contenant l'information de sélection (W) sous la forme de l'indicatif ($KVSTA_B$) du central de destination et de l'indicatif (KB) de l'abonné de destination ainsi que l'indicatif d'identification (I) sous la forme de l'indicatif ($KVST_A$) du central de départ et de l'indicatif (KA) du poste d'abonné ainsi que le premier indicatif ($A-D_1$) du faisceau de lignes et un autre indicatif ($D_1-D_2$ ou $D_1-VST_B$) du faisceau de lignes, que lors de la traversée d'un autre central de transit ($VST_{D3}$ ... $VST_{Dn}$), une autre recherche de voies d'acheminement est exécutée et l'indicati du faisceau de lignes, qui est associé au faisceau de lignes sélectionné, est ajouté à la suite de donnés d'établissement déjà existante, que le central de destination ($VST_B$) mémorise la suite de données d'établissement de liasion (par exemple D") émise par le central de transit (par exemple $VST_{D2}$) situé en amont du central de destination dans l'acheminement de la liaison, ou bien directement par le central de départ ($VST_A$), et renvoie par l'intermédiaire de tous les centraux de transit ($VST_{D1}$ ... $VST_{Dn}$) un télégramme d'accusé de réception contenant l'ensemble de l'information de la suite de données d'établissement de liaison (par exemple D") apparue jusqu'à ce que le central de destination soit atteint, au central de départ ($VST_A$) où cette information est également mémorisée, et que les liaisons partielles réelles sont supprimées après que la suite respectivement émise de données d'établissement (par exemple D") ou le télégramme d'accusé de réception ait été mémorisée préalablement dans chaque central de transit concerne (VST$_{D1}$, VST$_{D2}$).

5. Système de commutation téléphonique suivant la revendication 1, 2 ou 3, caractérisé par le fait qu'il est prévu, du côté émission, un détecteur de parole qui est associé de façon permanente, ou en cas de besoin, à la ligne qui constitue une partie de la liaison téléphonique considé rée, en un emplacement approprié, par exemple dans un premier étage de sélection de groupes du central de départ (VST$_A$) ou du central de destination (VST$_B$) et qui est à même d'identifier des pauses de conversation et de former, à partir de là, les phrases (P).

6. Réseau de commutation téléphonique suivant la revendication 1,2, 3 ou 5, caractérisé par le fait que le signal de conversation codé constituant une phrase (P) est mémorisé temporairement uniquement dans le central qui est le plus proche de l'abonné émmettant, à savoir soit dans le central d'origine (VST$_A$), soit, pour une transmission téléphonique en sens opposé, dans le central de destination (VST$_B$), pendant un intervalle de temps prédéterminé de mémorisation temporaire de par exemple 15 ms, pendant lequel la suite (Z) formant indicatif de destination, qui doit être placée avant la phrase (P) à émettre et est formée préalablement lors de l'établissement de liaison, est formée et est émise.

7. Réseau de commutation téléphonique suivant la revendication 6, caractérisé par le fait que la durée de mémorisation temporaire est choisie suffisamment longue pour qu'il apparaisse un temps mort pendant lequel il est possible d'établir une distinction entre la parole d'une part et des bruits de grésillements d'autre part.

8. Réseau de commutation téléphonique suivant la revendication 7, caractérisé par le fait que, une fois que le détecteur de parole a identifié la fin de la phrase actuelle (P) et que par conséquent la transmission de cette phrase (P) est achevée, un signal caractéristique de repos, par exemple sous la forme 11111111, est transmis sous la forme d'octets.

9. Réseau de commutation téléphonique suivant la revendication 8, caractérisé par le fait qu'au moins deux octets du signal caractéristique de repos sont ajoutés à la phrase concernée (P) en tant qu'indicatif de fin.

10. Réseau de commutation téléphonique suivant la revendication 8, caractérisé par le fait que chacun des centraux (VST$_A$ ou VST$_B$) émettant délivre, respectivement après la fin d'une phrase (P), le signal caractéristique de repos, par exemple sous la forme 11111111, dans la ligne concernée, jusqu'à ce qu'une nouvelle phrase (P) ait à être transmise.

11. Réseau de commutation téléphonique suivant la revendication 10, caractérisé par le fait que, pendant une pause de conversation, le central terminal effectuant respectivement la réception (par exemple VST$_B$) délivre, selon un mode d'octets, un indicatif de pause, par exemple sous la forme 00000000, dans la ligne d'abonné qui lui est raccordée et qui est concernée par la liaison téléphonique considérée.

12. Réseau de commutation téléphonique suivant l'une des revendications précédentes, caractérisé par le fait que pour une phrase (P) possédant un nombre d'octet supérieur à un nombre moyen, dans la suite (Z) formant indicatif de destination, on obtient une priorité sur la base de laquelle une telle phrase (P) est prise en compte de façon préférentielle lors de l'établissement actuel d'une liaison réelle.

13. Réseau de commutation téléphonique suivant l'une des revendications précédentes, caractérisé par le fait qu'il est prévu un caractère de début de destination et qu'au début et dans ce caractère de début de destination il est prévu une information concernant la longueur de l'information relative à la destination.

14. Réseau de commutation téléphonique suivant l'une des revendications précédentes, caractérisé par le fait que l'établissement de la suite (Z) formant indicatif de destination est prévu de telle sorte que cette suite (Z) se différencie d'un octet ayant la forme 11111111, par au moins 2 bits.

15. Réseau de commutation téléphonique suivant l'une des revendications précédentes caractérisé par le fait qu'un indicatif de service est contenu dans la suite (Z) formant indicatif de destination.

16. Réseau de commutation téléphonique suivant l'une des revendications précédentes, caractérisé par le fait que les suites (D', D'') de données d'établissement de liaison sont protégées par un bit de sécurité, par exemple par un bit de parité.

17. Réseau de commutation téléphonique suivant la revendication 14, caractérisé par le fait que l'indication, qui est contenue dans la suite (Z) formant indicatif de destination et qui concerne le nombre des octets contenus dans cette suite, est réduite de 1 respectivement après l'utilisaiton et l'annulation ultérieure d'un octet.

18. Réseau de commutation téléphonique suivant la revendication 2, caractérisé par le fait que l'indicatif (KB) de données de destination et l'indicatif (KA) de l'abonné d'origine sont constitués chacun de deux octets et que les octets prévus pour l'indicatif (KB) de l'abonné de destination et pour l'indicatif (KA) de l'abonné de départ ne contiennent pas les octets ayant les formes 00000000 et 11111111 ainsi que les octets qui sont utilisés par ailleurs dans le réseau de commutation téléphonique dans les liaisons virtuelles.

19. Réseau de commutation téléphonique suivant la revendication 2, caractérisé par le fait que chaque faisceau de lignes est désigné respectivement d'une manière indépendante localement dans la suite (D', D'') de données d'établissement de liaions et que l'indicatif considéré (par exemple A—D$_1$) du faisceau de lignes est désigné par de préférence deux octets.

20. Réseau de commutation téléphonique suivant la revendication 1 ou 2, caractérisé par le fait qu'une liaison virtuelle (V$_V$) est établie égale-

ment, au-delà d'un central de destination (VST<sub>B</sub>), par sélection directe dans une installation de télécommunications à postes supplémentaires, montée en aval.

## FIG 1

VR VR VR

A
(KA)

VSt$_A$
(KVSt$_A$)

VT
(A–D1)

VSt$_{D1}$

VT
(D1–D2)

VSt$_{Dn}$

VT
(Dn–B)

VSt$_B$
(KVSt$_B$)

B
(KB)

VV

## FIG 2

D'

I   W

| A – D1 | | | | |

KA   KVSt$_A$   KB   KVSt$_B$

## FIG 3

D''

I   W

| D1 – D2 | A – D1 | | | | |

KA   KVSt$_A$   KB   KVSt$_B$

## FIG 4

S

Z   E   P   Z   E

(E)   (E)